# EUROPEAN PATENT APPLICATION

(11) **EP 4 092 847 A1**
(43) Date of publication of application: **23.11.2022**
(21) Application number: 21174282.0
(22) Date of filing: 18.05.2021
(51) Int. Cl.: H01S 3/04, H01S 3/06, H01S 3/094, H01S 3/23, H01S 3/00, H01S 3/02, H01S 3/042, H01S 3/0941, H01S 3/16

(54) **LASER AMPLIFIER APPARATUS AND METHOD OF AMPLIFYING LASER PULSES**

(71) Applicant: Deutsches Elektronen-Synchrotron DESY, 22607 Hamburg (DE)
(72) Inventor: Zapata-Casares, Luis-Enrique, Redondo Beach, CA 90277 (US); Kärtner, Franz Xaver, 22607 Hamburg (DE); Schust, Matthias, 22607 Hamburg (DE)
(74) Representative: v. Bezold & Partner Patentanwälte - PartG mbB

(57) **Abstract**

A laser amplifier apparatus 100 for creating laser pulses by optical amplification comprises a gain medium 10 arranged for receiving at least one seed pulse 2 and at least one pump pulse 3 and for emitting at least one optically amplified output laser pulse 1, a resonator device 20 including the gain medium 10 and comprising a plurality of resonator mirrors 21, 22, 23, 24 spanning a folded, telescopic resonator beam path 25 with a multi-pass geometry, so that multiple passages of the seed 2 and pump pulses 3 through the gain medium 10 are provided, a coupler arrangement 30 configured for coupling the at least one seed pulse 2 and the at least one pump pulse 3 to the resonator device 20 and for coupling the output laser pulses 1 out of the resonator device 20, and a cooling device 40A arranged for cooling the gain medium 10, wherein the resonator mirrors 21, 22, 23, 24 comprise a first telescope mirror 21 and a second telescope mirror 22 being arranged with a mutual distance and a focal section therebetween and defining an optical axis z of the resonator device 20, and a first group of end mirrors 23 and a second group of end mirrors 24 arranged between the first and second telescope mirrors 21, 22 for forming the folded resonator beam path 25, wherein each of the first and second groups of end mirrors are arranged on a ringshaped section surrounding the optical axis z, and the resonator mirrors 21, 22, 23, 24 are arranged such that emitting sections of the gain medium 10 are imaged in themselves. Furthermore, a method of amplifying laser pulses is described, wherein the laser amplifier apparatus 100 is employed.

## Description

### Field of the invention

The invention relates to a laser amplifier apparatus, configured for creating laser pulses by optical amplification. In particular, the invention relates to a high-energy-pulsed and high-average-power laser amplifier apparatus, including a gain medium arranged in a multi-pass beam path configuration. Furthermore, the invention relates to a method of amplifying laser pulses, wherein the laser amplifier apparatus is used. Applications of the invention are available e. g. in optical parametric chirped pulse amplification, inverse Compton scattering, high-energy THz generation and material processing.

### Technical background

In the present specification, reference is made to the following prior art illustrating the technical background of the invention, in particular relating to the configuration and operation of thin disc lasers and laser amplifiers:
[1] US 6,347,109 B1;
[2] US 6,763,050 B2;
[3] US 6,834,070 B2;
[4] US 9,065,241 B2;
[5] L. E. Zapata et al. in "Optics Letters" vol. 40, no. 11, 2015, pp. 2610-2613;
[6] OSA Laser Congress ASSL 2018 Boston (ATu6A.1) One Joule 500 Hz cryogenic Yb:YAG Laser Driver; and
[7] OSA Laser Congress CLEO 2019 San Jose (SM4E.1) Joule-class 500 Hz Cryogenic Yb:YAG Chirped Pulse Amplifier.

In science and industry, there is a need for pulsed lasers which are capable of simultaneously emitting high energy and high average power. In particular, laser systems for producing joule-level laser pulses together with kilowatt average-power output would offer new applications in scientific and industrial markets. According to an example of scientific applications, a laser amplifier producing high energy pulses at high repetition rates is required for an all-optically-driven Inverse Compton Scattering (ICS) based X-ray source. Other applications of high energy and high average power laser amplifier technology are pump-probe experiments instrumentally used in accelerator facilities, wherein laser drivers provide pumps for the generation of high-average-power ultrashort pulses with wavelengths ranging from the ultraviolet to the mid-infrared through parametric amplification schemes, such as optical parametric chirped pulse amplification (OPCPA). Furthermore, fast (ns), energetic (1 to 50 Joule) laser pulses with low repetition rates (1 to 20 Hz) are used in niche industrial applications, such as laser peening, percussion drilling and laser trepanning.

Known laser sources, e. g. for accelerator applications, generate energetic ultrafast (ps) laser pulse-trains e. g. with MHz repetition rate in millisecond bursts repeating at 10 Hz frequency. Present science and industry users need a new generation of lasers that provide a higher level of performance in terms of energy and average power. As an example, industry applications, like strengthening of gears and valves, the drilling at high angles of fuel injectors and turbine blade cooling passages, etc., in the automotive industry, need a high throughput to achieve production levels that make the process accessible to the mass-market. This requires a laser system that can provide high beam-quality joule-level laser pulses of nanosecond pulse durations and kilowatt average powers at high repetition rates (kHz).

Laser sources, which are based on optically pumping thin disc gain materials are described e. g. in [1], [2] and [3]. As these lasers sources (thin disc lasers) do not have amplifier configurations, they have a limited output power. As a further restriction, these techniques suffer from optical damages at the thin disc gain materials.

A laser amplifier using a solid state gain medium is proposed in [4] for obtaining high pulse energies in short pulses of a few hundred picosecond durations. The gain medium is a composite optical gain element which is made of substantially index-matched sections: an undoped YAG cap bonded to a gain layer of Yb:YAG. With the composite optical gain medium of [4], pumped in a multi-pass configuration with telescopic imaging, an output energy of 100 mJ at 250 Hz has been obtained ([5] to [7]). However, the technique of [4] to [7] still may have disadvantages in terms of limited output power and a complex device configuration. If increased pump energies are applied, a risk of optical damages at the optical gain medium substantially increases, thus reducing the operation duration of the amplifier.

### Objective of the invention

Objectives of the invention are to provide an improved laser amplifier apparatus for creating laser pulses by optical amplification and an improved method of amplifying laser pulses, avoiding disadvantages of conventional techniques and/or providing new or extended applications. In particular, laser pulse amplification is to be obtained with increased output power, increased repetition rate, reduced complexity, reduced risk of optical damages and/or extended duration of stable operation, in particular at the gain medium.

### Summary of the invention

The above objectives are solved by a laser amplifier apparatus and a method of amplifying laser pulses, comprising the features of the independent claims. Preferred embodiments and applications of the invention are defined in the dependent claims.

According to a first general aspect of the invention, the above objective is solved by a laser amplifier apparatus for creating laser pulses by optical amplification, i. e. by irradiating a crystalline gain medium with synchronized series of equally spaced pump and seed laser pulses, wherein amplified output laser pulses are created by a nonlinear interaction of the pump and seed laser pulses in the gain medium. Alternatively, single pulse amplification or burst mode amplification can be provided, wherein macropulses are amplified that contain groups of micropulses with different repetition rates.

The laser amplifier apparatus comprises the gain medium, which is arranged for receiving at least one seed pulse, preferably a sequence of seed pulses, and at least one pump pulse, preferably a sequence of pump pulses, and for emitting at least one optically amplified output laser pulse, preferably a sequence of optically amplified output laser pulses. Spatial portions of the gain medium, where the at least one amplified output laser pulse is created are called emitting sections of the gain medium. A cooling device is provided which is adapted for cooling the gain medium. The cooling device is thermally coupled with the gain medium, so that heat created by the nonlinear interaction of the pump and seed laser pulses in the gain medium can be conducted out of the laser amplifier apparatus.

The laser amplifier apparatus further comprises a resonator device including the gain medium and comprising a plurality of resonator mirrors spanning a folded, telescopic resonator beam path with a multi-pass geometry. The resonator mirrors are arranged such that multiple passages of the seed and pump pulses through the gain medium are provided.

For coupling the at least one pump pulse and the at least one seed pulse to the resonator device and for coupling the at least one output laser pulse out of the resonator device, the laser amplifier apparatus further comprises a coupler arrangement. The coupler arrangement comprises reflective elements, like fully reflective and/or semi-reflective mirrors. The reflective elements are arranged such that the seed and pump pulses can be directed from a seed source device and from a pump source device via an input coupling portion (or: first coupler device) into the resonator beam path and the amplified output laser pulses can be directed via an output coupling portion (or: second coupler device) out of the resonator beam path. Preferably, the resonator device and the output coupling portion are configured such that a single amplifier aperture is provided where the output laser pulses are emitted.

According to the invention, the resonator mirrors comprise a first telescope mirror and a second telescope mirror, which arranged with a mutual distance and a focal section therebetween and which define an optical axis (or: main axis, z-axis) of the resonator device. Furthermore, according to the invention, the resonator mirrors comprise a first group of end mirrors and a second group of end mirrors which are arranged between the first and second telescope mirrors for forming a folded resonator beam path, wherein each of the first and second groups of end mirrors are arranged on a ring-shaped section surrounding the optical axis. Accordingly, beam path sections of the resonator beam path are inclined relative to the optical axis of the resonator device. The resonator mirrors are arranged such that the emitting sections of the gain medium are imaged in themselves.

Folding of the resonator beam path means that the end mirrors are arranged in a space between the first and second telescope mirrors, i. e. the beam path of each pass of the pulses through the resonator runs from the input coupling portion of the coupler arrangement with multiple reversals via the gain medium, the end mirrors and the telescope mirrors to the output coupling portion of the coupler arrangement. Pulse amplification is obtained with each pass of the pulses through the resonator device. Preferably, the pulses run from the input coupling portion to the gain medium, followed by a repeated sequence of reversals, including a reversal to an end mirror of the first group of end mirrors, a reversal to the first telescope mirror, a reversal to the second telescope mirror, a reversal to an end mirror of the second group of end mirrors, another reversal to the second telescope mirror and a reversal back to the gain medium.

According to a second general aspect of the invention, the above objective is solved by a method of amplifying laser pulses, wherein the laser amplifier apparatus according to the first general aspect of the invention or one of its embodiments is used. Amplifying laser pulses comprises the steps of creating at least one seed pulse and at least one pump pulse, preferably sequences of seed pulses and pump pulses, coupling the at least one pump pulse and the at least one seed pulse to the resonator device of the laser amplifier apparatus and synchronously irradiating the gain medium, wherein multiple passages of the seed and pump pulses through the gain medium are provided by the plurality of resonator mirrors of the folded, telescopic resonator beam path with the multi-pass geometry, and coupling at least one output laser pulse amplified in the gain medium out of the resonator device.

The inventors have found that the objective of the invention can be solved by folding the resonator beam path, resulting in particular in the following advantages. Advantageously, contrary to the technique of [4] to [7], the inventive folded resonator beam path provides a compact configuration of the laser amplifier apparatus, which allows an improved cooling efficiency, in particular in cooling the gain medium. Thus, the cooling of the laser amplifier apparatus, especially the gain medium, can be improved in an advantageous manner. The cooling of the gain medium in particular can be increased due to an improved access to the gain medium in the resonator beam path. Thus, the laser amplifier apparatus can be operated with increased output power and/or repetition rate, while reducing risk of optical damages. Furthermore, the complexity of the optical setup can be reduced and/or the mechanical stability of the laser amplifier apparatus can be improved by providing the folded resonator beam path. The number of passages of the resonator beam path through the gain medium can be increased without substantially increasing the complexity of configuration, so that the output power compared e. g with the technique of [4] to [7] can be increased. Folding of the resonator beam path additionally provides the compact configuration which can be adapted to spatial requirements in a routine application, e. g. in a manufacturing process in an improved manner.

Advantageously, a high-energy-pulsed high-average-power diffraction-limited laser amplifier is created with the invention, that contrary to conventional techniques is capable of improved handling of both of high power and high energy. With the inventive laser amplifier apparatus, output laser pulses can be generated, which have an energy equal to or above 500 mJ, in particular equal to or above 1J at a repetition rate of at least 1 Hz, in particular at least 0.1, 0.2, 0.3, 0.4 and 0.5 kHz. Advantageously, these pulses have been demonstrated in practice passively after initial operation and without the need for further adjustments. Even higher repetition rates up to 1 kHz can be obtained, in particular with further adjustments. Thus, the laser amplifier apparatus is capable of producing output laser pulses with substantially increased average power in the kilowatt range and peak power in the gigawatt range. The invention enables the amplification of e. g. joule-level gigawatt laser pulses while avoiding optical damage; simultaneously operating at kHz repetition rates steadily and durably for an unlimited period of time with only standard laboratory electrical power and cooling infrastructure provided.

According to a preferred embodiment of the invention, the gain medium is a composite disk gain element comprising a doped laser active part bonded to a non-doped part, wherein the disk gain element is shaped with a plane surface facing to the folded resonator beam path, a backplane surface and a curved, preferably parabolic, surface that is formed for deflecting spontaneous emission out of the gain element volume. The backplane surface preferably is a highly reflective surface. Advantageously, by reducing the circulation of spontaneous emissions inside the gain element volume, the composite disk gain element improves the efficiency of the amplification process and improves the beam profile of the amplified output laser pulses.

According to a further preferred embodiment of the invention, the doped laser active part and the non-doped part have mutually different crystalline orientations relative to the optical axis of the resonator device. The crystalline orientations of the doped laser active part and the non-doped part are preferably selected such that a depolarization of the laser pulses circulating in the resonator device is reduced or completely suppressed. Advantageously, the depolarization reducing effect of crystal orientation further increases the efficiency of pulse amplification in the gain medium. The depolarization reducing effect of crystal orientation can be provided on the basis of a numerical simulation of the optical properties of the gain medium materials.

The gain medium of the laser amplifier apparatus comprises a crystalline material. Crystallinity of the gain medium influences the amplification process. Mono-crystalline materials are preferred for increasing the amplification efficiency. However, growing mono-crystalline materials of large size, e. g. greater than 20 mm, is challenging with available laser gain materials which are suitable for optical amplification of laser pulses. The inventors have found that this restriction advantageously can be avoided if, according to a further, particularly preferred embodiment of the invention, the doped laser active part and/or the non-doped part of the composite disk gain element is made of multiple bonded disk sectors, wherein each of the disk sectors is made of a mono-crystalline material having no or negligible crystal defects. The disk sectors are arranged in a plane perpendicular to the plane surface and main extension of the disk shaped gain medium, for forming the doped laser active part or the non-doped part, respectively. For example, the composite disk gain element can comprise at least two, in particular at least three, four or more, disk sectors of the doped laser active part and/or the non-doped part. The sectioning can be transverse to the beam path or longitudinal to the beam path for the purpose of increased gain bandwidth or ease in manufacturing. Each sector comprises a section of the gain medium extending from the central axis to the outer boundary thereof. By the particular use of an increased size gain medium with high crystal quality, the amplification of joule-level gigawatt laser pulses is facilitated while avoiding optical damage. Simultaneously, operating at kHz repetition rates steadily and durably for an unlimited period of time with only standard laboratory electrical power and cooling infrastructure can be obtained.

According to another preferred variant of the invention, the composite disk gain element has a spatial orientation such that main extension and in particular the plane surface of the composite disk gain element is arranged perpendicular to a horizontal axis. The composite disk gain element has a plate shape with a main planar extension parallel to the plane surface. As the main planar extension (and the plane surface of the composite disk gain element) is perpendicular to the extension of the resonator device, the laser amplifier apparatus is preferably configured for an operation with a completely horizontal extension of the resonator device (horizontal main axis). This facilitates in an advantageous manner adjustments of the resonator mirrors and the coupling arrangement.

As a further advantage of the invention the laser amplifier apparatus enables the provision of the composite disk gain element with at least one of the following features, which additionally contribute to the solution of the above objective of the invention, in particular with regard to increasing the output power.

Firstly, the composite disk gain element preferably has a diameter (dimension along the plane surface) in a range from 5 mm to 10 cm. Compared with conventional techniques, substantially larger composite disk gain elements can be used, which provide more and larger emitting sections and correspondingly increased output power.

Alternatively or additionally, the curved surface of the composite disk gain element is a section of a parabolic surface. Advantageously, this optimizes a suppression of spontaneous emission loss in the gain medium.

Alternatively or additionally, the curved surface of the composite disk gain element is defined in cylindrical coordinates with origin at the center of the plane surface by z(r) = 6.28 - 1.70*r + 0.106*r², with r ≥ 10mm and 0 ≤ z(r) ≤ 10 mm. Advantageously, this geometry has been found by Monte-Carlo ray-trace computations to eject 99% of the fluorescence generated in the gain medium.

According to another alternative or additionally, the composite disk gain element is preferably made of Yb:YAG or Yb:LuAG. Particularly preferred, the doped laser active part, e. g. made of Yb:YAG or Yb:LuAG, is doped with Yb. These materials have particular advantages in terms of a high amplification efficiency and a broad range of amplified wavelengths as well as thermophysical properties helpful in the rejection of waste heat.

Alternatively or additionally, the larger plane surface of the composite disk gain element preferably has an anti-reflective coating, which has advantages for efficient incoupling laser pulses into the composite disk gain element and reducing reflection loss. The backplane surface of the gain element preferably has a highly reflective coating that returns the amplifying beam towards the resonator device.

If according to another preferred feature of the invention, the gain medium is arranged in a central opening of the first telescope mirror, advantages in terms of efficient cooling of the gain medium are obtained. As the telescope mirror represents one of the longitudinal ends of the resonator device, the access to the gain medium with the cooling device is facilitated. Particularly preferred, the cooling device is thermally coupled to the backplane surface of the composite disk gain element. Advantageously, any deteriorating effects of the cooling device on the beam path in the resonator device can be minimized.

According to a further preferred embodiment of the invention, the coupler arrangement comprises the first coupler device which is configured for coupling the at least one pump pulse to the resonator device, wherein the first coupler device comprises at least one incoupling mirror being arranged in the resonator device between the telescopic mirrors with an inclination relative to the optical axis of the resonator device. Advantageously, the at least one incoupling mirror is included in the resonator device without deteriorating the beam path thereof.

Particularly preferred, the at least one incoupling mirror is arranged at the focal section between the first and second telescope mirrors. This position has the advantage that the beam path in the resonator device has a minimum diameter at the focal section, so that sufficient space is provided for positioning and adjusting the incoupling mirror.

The incoupling mirror or a mirror carrier thereof can be provided with a pin hole (aperture) configured for passing the light field circulating in the resonator device. In the imaging beam path of the resonator device, the aperture represents a pin hole in a Fourier plane relative to the gain medium. Preferably, the focal section between the first and second telescope mirrors can be located in or adjacent to the pin hole. Advantageously, the pin hole acts as a frequency filter and/or allows cleaning of the beam profile of the circulating light field. As an example, the pin hole can have a diameter of 3 mm to 10 mm, preferably from 4 mm to 5 mm.

According to a further advantageous embodiment of the invention, the first coupler device comprises at least two input coupling mirrors being arranged for coupling pump pulses from different directions to the resonator device. Each of the at least two input coupling mirrors is inclined to another radial direction relative to the optical axis of the resonator device. The at least two input coupling mirrors can be carried on a common mirror carrier, preferably including the pin hole.

Providing at least two input coupling mirrors advantageously allows incoupling of pump pulses from multiple laser sources, thus further increasing the output power of the inventive laser amplifier apparatus. Furthermore, the multiple input coupling mirrors allow a simple adaptation of the laser amplifier apparatus to the power requirements of a particular application thereof. An input coupling mirror which is not used for incoupling laser pulses can be combined with a curved auxiliary mirror arranged for imaging pump pulse portions reflected by the gain medium back to the gain medium.

According to another optional feature of the invention, the first coupler device is coupled with a main cooling system. Advantageously, coupling with the main cooling system avoids an overheating of the first coupler device by the at least one pump pulse.

According to a further preferred embodiment of the invention, the coupler arrangement comprises the second coupler device configured for coupling the at least one seed pulse to the resonator device and for coupling the at least one output laser pulse out of the resonator device, wherein the second coupler device comprises one of the resonator mirrors of the second group of end mirrors and a polarizing beam splitter, like a polarizing beam splitter prism or plate. Advantageously, one of the resonator mirrors fulfils a double function as it is additionally used as an output coupling mirror.

As a further advantage of the folded resonator design of the inventive laser amplifier apparatus, resulting in a compact configuration, a housing can be provided according to a further particularly preferred embodiment of the invention. The housing, preferably an evacuable container, accommodates at least the gain medium and the resonator device as well as at least parts of the coupler arrangement and the main cooling system. The housing has a pressure tight housing wall with a pump interface for connection with a vacuum pump and optionally with transparent window sections as pulse in-coupling and out-coupling ports and/or viewing ports.

Preferably, the housing wall fulfils a double function in terms of providing the pressure tight container and carrying parts of the resonator device. In particular, the resonator mirrors can be carried on an inner side of the housing wall, thus improving the resonator stability in an advantageous manner. According to a further advantageous variant, the main cooling system can include a cooling circuit for cooling the housing wall, e. g. with water.

According to a further preferred variant of the invention, the resonator device is free of optical lenses. According to this optional feature, there are no solid or liquid refractive substances in the beam path of the resonator device. Advantageously, this allows further increasing of the circulating power in the resonator device and increasing the output power of the laser amplifier apparatus.

According to the invention, the laser amplifier apparatus can be provided as an amplifier component as such, which can be combined with pump and seed sources in dependency on particular application requirements. Alternatively, the pump and seed sources can be provided as an integrated part of the laser amplifier apparatus, being fixedly connected e. g. with the coupling arrangement and/or with the housing. According to this embodiment of the invention, the laser amplifier apparatus preferably includes a pump source device with at least one pump pulse laser source arranged for creating at least one pump pulse and a seed source device with at least one seed pulse laser source arranged for creating at least one seed pulse.

As a further advantage, the laser amplifier apparatus has a variety of applications in science and industry. As an example of scientific applications, the laser amplifier apparatus can be used as a gigawatt laser amplifier for generating energetic ultrafast laser pulses, like the primary-photons required to produce X-rays. Using the technique of chirped pulse amplification (CPA), seed pulses stretched in time to e. g. 0.5 ns duration can be amplified up to about 2-joule energy at kHz repetition rates in the inventive laser amplifier apparatus and then compressed to < 10 ps duration using a grating compressor. The resulting 100-Gigawatt class laser pulses can be made to collide with counter propagating MeV electron bunches, thus serving as an optical undulator for spawning ultrafast X-ray pulses by Inverse Compton Scattering (ICS).

### Brief description of the drawings

Further details and advantages of the invention are described in the following with reference to the attached drawings, which schematically show in:
- Figure 1:: a sectional side view of the resonator device in a laser amplifier apparatus according to an embodiment of the invention;
- Figure 2:: a perspective view of the beam path in Figure 1;
- Figure 3:: details of a gain medium in a laser amplifier apparatus according to an embodiment of the invention;
- Figure 4:: a perspective outer view of a laser amplifier apparatus according to an embodiment of the invention;
- Figure 5:: an exploded view of components of the laser amplifier apparatus according to Figure 4;
- Figure 6:: details of a first coupler device for coupling pump pulses to the resonator device of a laser amplifier apparatus according to an embodiment of the invention; and
- Figure 7:: details of a gain medium carrier in a laser amplifier apparatus according to an embodiment of the invention.

### Preferred embodiments of the invention

Features of preferred embodiments of the invention are described in the following with exemplary reference to a laser amplifier apparatus to be used as an ICS source for the production X-rays. The implementation of the invention is not restricted to this particular application. For other applications, the geometry and/or dimensions in particular of the resonator beam path, the gain medium, the coupling arrangement and the main cooling system and the cooling device can be modified.

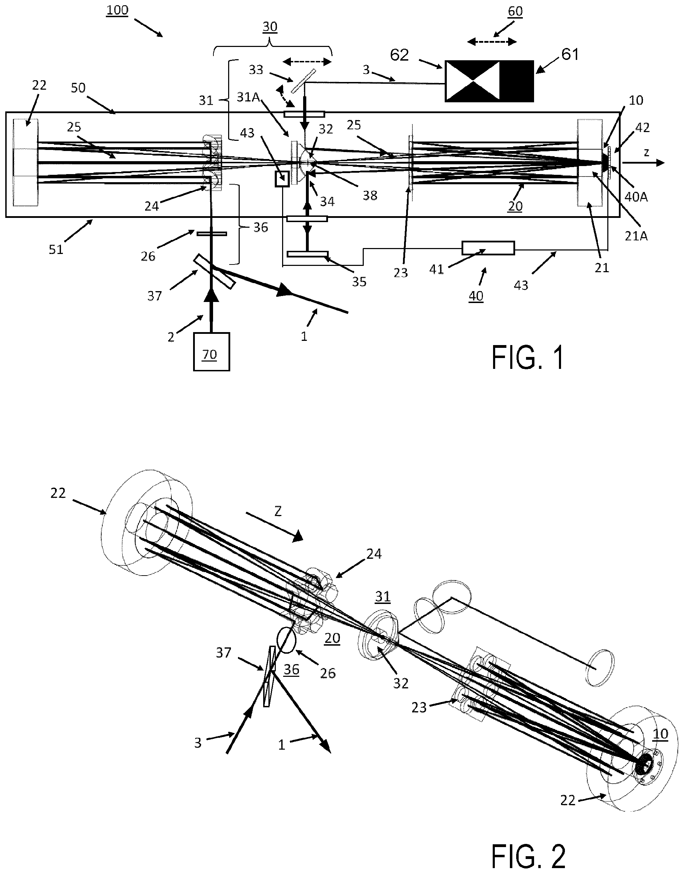

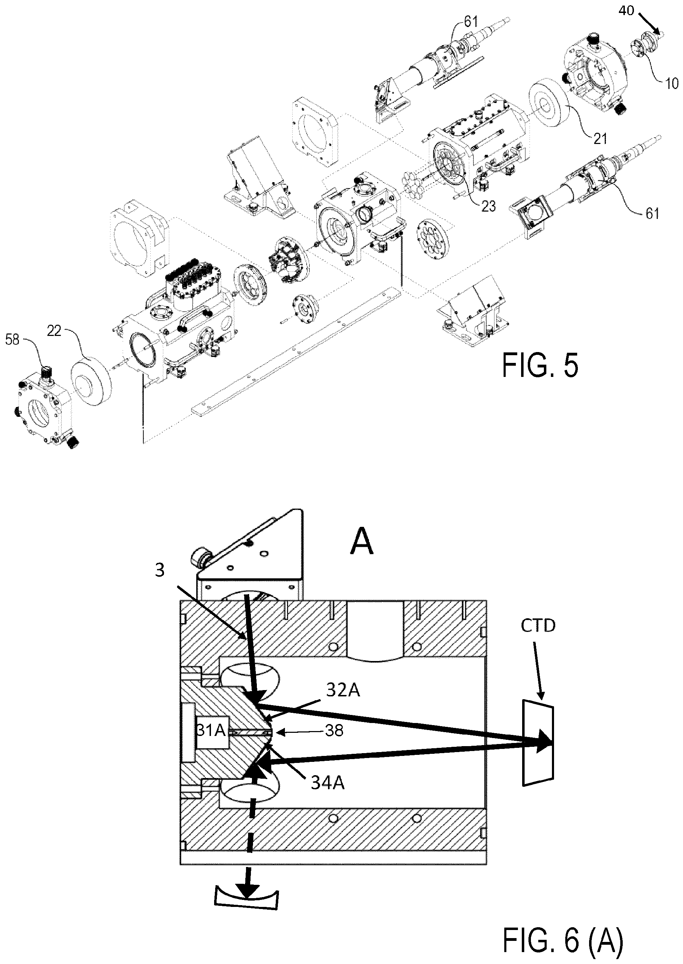

Figures 1 and 2 show the gain medium 10 and the resonator device 20 included in a housing 50 (not shown in Figure 2) according to a preferred embodiment of the laser amplifier apparatus 100. Figure 1 shows a schematic diagram of an image-relayed 16-pass architecture of the resonator device 20 with output (1) and input beams (2, 3) with one of four full transit "rings" at a mid-plane, while Figure 2 is a full 3-dimensional ray trace of the multi-pass architecture and the main optical components. With more details, the resonator device 20 comprises multiple resonator mirrors spanning a folded resonator beam path. The resonator mirrors comprise a first telescope mirror 21 having a central hole 21A, through which the gain medium 10 is irradiated, a second telescope mirror 22, a first group of end mirrors 23 and a second group of end mirrors 24. The mirrors are supported by mirror carriers, which are not shown in Figures 1 and 2 (further details see Figure 5).

The first and second telescope mirrors 21, 22 are arranged with a mutual distance along the optical axis (z-axis). Each of the first and second telescope mirrors 21, 22 is a curved, preferably parabolic, mirror, e. g. with a 1 meter radius of curvature or similar, with a predetermined focal section on the z-axis. Preferably, a light field circulating in the resonator device can be focussed in the focal section to a beam diameter in a range from 0.025 mm to 0.060 mm. The first and second telescope mirrors 21, 22 are arranged such their focal sections have a common position on the z-axis. Preferably, the focal sections coincide in the middle between the first and second telescope mirrors 21, 22. The first and second telescope mirrors 21, 22 have a diameter of e. g. 10 cm, and they are made of e. g. suprasil or infrasil or a high grade silica glass not absorbing pump light. The distance between the first and second telescope mirrors 21, 22 is selected in a range from 0.5 to 1 meter, substantially equal to the radius of curvature.

Each of the first and second groups of end mirrors 23, 24 comprises 8 plane mirrors being arranged on a ring-shaped section surrounding the optical axis, in particular a circle, which extends in a plane perpendicular to the optical axis. Each of the end mirrors 23, 24 has a reflective surface facing to one of the first and second telescope mirrors 21, 22 and having an inclination relative to the optical axis. In the centre of each of the first and second groups of end mirrors 23, 24, sufficient space for passing the light field from the first and second telescope mirrors 21, 22 to the focal section is provided. The end mirrors 23, 24 have a diameter of e. g. 2.5 to 3.5 cm, and they are made of e. g. fused silica or high grade BK7. The distance between the each of the first and second groups of end mirrors 23, 24 and the respective first and second telescope mirrors 21, 22 is e. g. equal to the individual mirrors radius of curvature or the sum of the focal lengths.

Figures 1 and 2 further show a coupler arrangement 30 comprising a first coupler device 31 for coupling the pump pulses 3 to the resonator device 20 and a second coupler device 36 for coupling the seed pulses 2 to the resonator device 20 and for coupling the amplified output laser pulses 1 out of the resonator device 20.

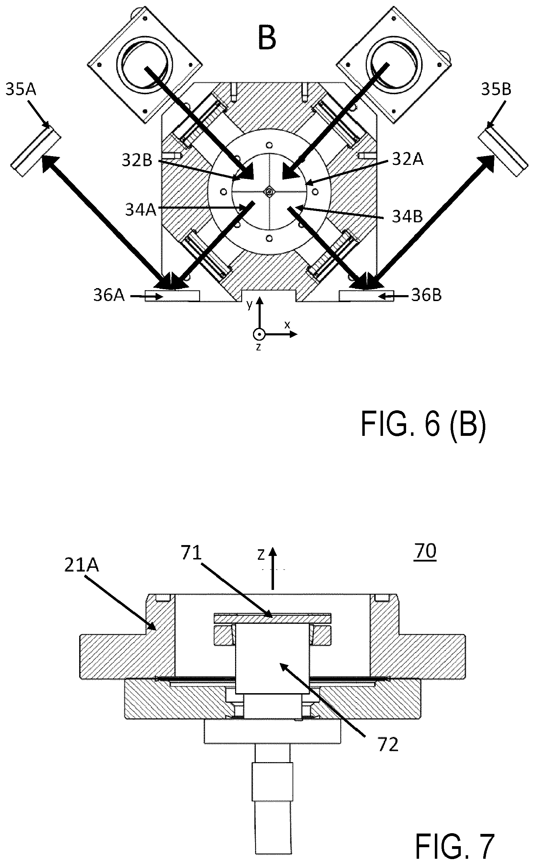

The first coupler device 31 comprises at least one plane or curved incoupling mirror 32, which has a reflective surface with an inclination, e. g. about 45°, relative to the optical axis such that the pump pulses 3 being directed from an axial side to the resonator device 10, e. g. with an angle of 90° to the optical axis, are deflected to the gain medium 10. The at least one incoupling mirror 32 is arranged such that the reflective surface thereof has a distance from the optical axis, so that the light field travelling between the first and second telescope mirrors 21, 22 can pass the at least one incoupling mirror 32. Preferably, the at least one incoupling mirror 32 is arranged on an incoupling mirror carrier 31A (see Figure 6B) with a central pinhole 38, which is positioned at the common focal section of the first and second telescope mirrors 21, 22 and in a Fourier plane relative to the gain medium 10.

With preferred applications, the first coupler device 31 comprises two incoupling mirrors, including the first mirror 33 (first pump pulse deflector 33, preferably a flat mirror), and the second mirror 32 of pyramidal shape with one of four inclined gold-coated facets 32A, 32B, being arranged for coupling pump pulses 3 from different directions to the resonator device 20, thus allowing in-coupling output of two pump sources to the resonator device 20. Further details of the two incoupling facet mirrors 32A, 32B are described below with reference to Figure 6.

Preferably, each incoupling mirror 32 is combined with a plane or curved first pump pulse deflector 33 directing pump pulses from a pulsed fiber-delivered diode pump source device 60 (not shown in Figure 2) with a diode pulse laser 61, from a telescopic projector 62 with e. g. 4 kW output power, to the incoupling mirror 32. Furthermore, the incoupling mirror 32 preferably is combined with another incoupling mirror 34 directing pump pulses after passage through the resonator device 20 and pumping interaction with the gain medium 10 to a second pump pulse deflector 35. The second deflector 35 is a curved back-reflector being arranged for reflecting the pump pulses back for a second passage through the resonator device 20 and a further pumping interaction with the gain medium 10.

The first pump deflector 33 is a dielectric coated fused silica or BK7 45-degree laser mirror, e. g. 50 mm in diameter (commercially available), the second pump deflector 35 is a piano concave laser mirror, e. g. 50 mm in diameter (commercially available), the pyramidal incoupling mirror 32 is customized fabricated with cooling channels of oxygen-free copper and four polished gold coated facets 32A, 32B, 34A, 34B in the shape of a pyramid with 70 mm base and 50 mm height at a 44 degree angle to the z-axis and included thru hole along its axis 38 6 mm in diameter to make space for the Fourier plane pinhole.

The second coupler device 36 comprises one of the resonator mirrors, like the end mirror 24 as an outcoupling mirror and a beam splitter plate 37. The beam splitter plate 37 is a polarizing beam splitter passing seed pulses 2 with a centre wavelength of 1029.5 nm from a seed pulse source 70, comprising a laser system developed before and described in the background reference [5], to the resonator device 20 and reflecting output pulses 1 with a centre wavelength of 1029.5 nm to an application site, like e. g. an interaction area in an experiment or a workpiece to be irradiated.

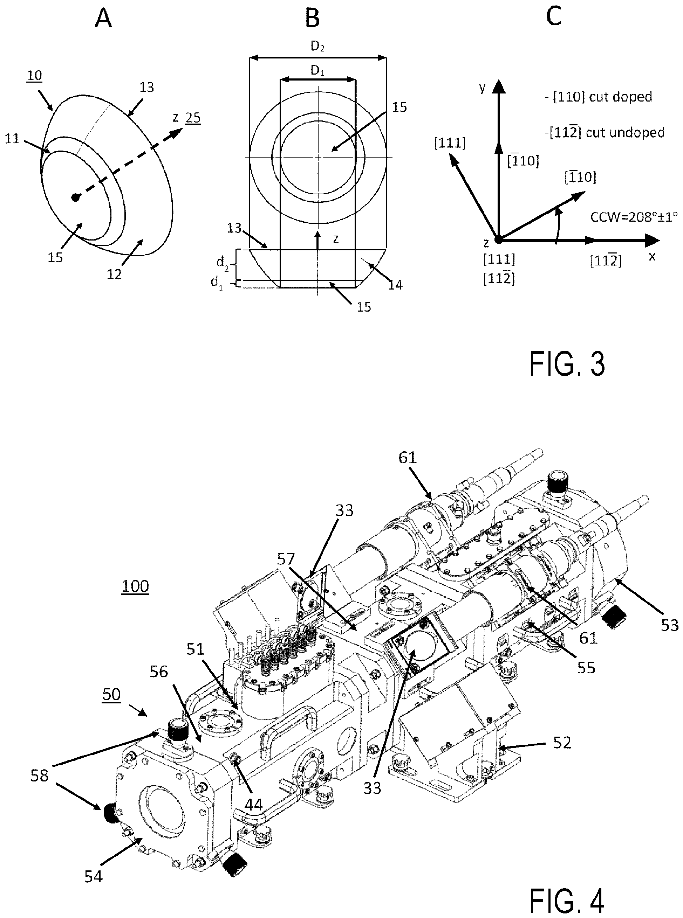

The housing 50 has a housing wall 51, which is made of aluminium with built in cooling passages and precision machined reference surfaces for the placement of optics and positioning internal hardware. Furthermore, the housing wall 51 includes transparent vacuum sealed windows for transmitting the pump, seed and output pulses and for monitoring purposes. Further details of the housing are shown in Figure 4.

In the resonator device 20, the resonator mirrors 21, 22, 23 and 24 span a folded, telescopic resonator beam path 25 with a multi-pass geometry including the gain medium 10. Firstly, the pump pulses 3 travel via the first coupling device 31 and the seed pulses 2 travel via the second coupling device 36 to the gain medium 10. The pump pulses 3 are absorbed in the gain medium 10 and store energy in metastable states of Yb3+ during the pumping period lasting a few hundred microseconds, a corresponding seed pulse 2 arriving at the end of the pumping period extracts partially the stored energy by the process of stimulated emission. The amplified pulses travel via the first group of end mirrors 23 where they are reflected back to the first telescopic mirror 21, reflected again to the second telescopic mirror 22 and subsequently to the second group of end mirrors 24 and the opposite direction back to the gain medium 10 for another amplification. After 16 passages through the gain medium 10, the end mirror 24 is reached, which simultaneously provides the outcoupling mirror, for a deflection to the beam splitter plate 37. The resonator mirrors 21 to 24 are configured such that emitting sections of the gain medium 10 are imaged in themselves.

In the illustrated embodiment of Figures 1 and 2, the diode-pumped gain medium 10 is placed at a conjugate relay plane within an imaging multipass amplification network. The optical architecture transports a polarized beam of seed pulses 2 through 8 image-relayed round-trips (16 gain passes) during amplification. p-polarized seed pulses 2 are transmitted through the polarizing beam splitter 37 and a quarter-wave plate 26 to become a circularly polarized input redirected to circulate off-axis describing a ring-shaped path in a mid-plane of the afocal telescope formed by the two telescopic mirrors 21, 22. The cooled tapered pinhole 38 adjacent to the incoupling mirror 32 provides a spatial filter at the common focus of the telescopic mirrors 21, 22 for smoothing any unexpected high frequency perturbations thus avoiding high intensity ripples throughout the transit. The gain medium 10 is strategically located and accessible through the hole 21A in the middle of the first telescopic mirror 21. The end mirrors 23, 24 being arranged in roof-top pairs rotate the plane of the ring-shaped optical path four times before the amplifying beam encounters the back mirror which returns the beam retracing its incoming path for another four rings passing the quarter wave plate where the polarization emerges rotated 90° relative to the input to become the output 1 at the high power polarizing beam splitter plate 37 where the input beam of seed pulses 2 and output beams are passively routed.

Figure 1 further schematically shows a main cooling system 40 based on a commercial chiller providing temperature controlled water to maintain a constant temperature +/- 0.1 C of the housing 50, the housing wall 51 and the incoupling mirror/pinhole assembly 32, 34, 38. Furthermore, a cooling device 40A is used to cool the gain-assembly 42 and gain medium 10. The preferred cryogenic cooling device 40A is based on a commercially available closed cycle cryogenic chiller. Optionally, the cooling device 40A may be based on a cooling device using liquid nitrogen as the cooling fluid.

Figure 3 illustrates further details of the gain medium 10, which is shown with a perspective view (Figure 3A) and side views perpendicular to and along (Figure 3B) the optical axis (z-axis) as well with an illustration of the crystal orientations of the gain medium materials (Figure 3C). The gain medium 10 is a composite disk gain element comprising a plate-shaped doped laser active part 11 bonded to a plate-shaped non-doped part 12. A larger plane surface 13 of the non-doped part 12 is perpendicular to the z axis, and it faces to the resonator beam path 25. A curved parabolic surface 14 of the gain medium 10, including radially outer surfaces of the materials 11, 12, is formed for deflecting spontaneous emission out of the resonator beam path 25. A smaller plane surface 15 of the gain medium at the doped laser active part 11 is perpendicular to the z axis.

The composite gain medium 10 is coated with an antireflective (AR) multilayer dielectric coating on its larger plane surface 13 and a high-reflective (HR) multilayer dielectric coating on its smaller backplane surface 15. Advantageously, this facilitates a lossless two-pass transit of the amplifying pulses into the gain medium 10.

The doped laser active part 11 comprises crystalline YAG doped with Yb, e. g. Yb³⁺:YAG with 5 % Yb, with a disk thickness d₁ of e. g. 2 mm and a diameter D₁ at the smaller plane surface 15 of e. g. 20 mm. The non-doped part 12 comprises non-doped crystalline YAG, with a thickness d₂ of e. g. 8 mm and a diameter D₂ at the larger plane surface 13 of e. g. 36 mm. The outer curved surface 14 is a parabolic surface. It is defined in cylindrical coordinates with origin at the centre of the plane surface 13 by z(r) = 6.28 - 1.70*r + 0.106*r², preferably with r ≥ 10 mm and 0 ≤ z(r) ≤ 10 mm.

The doped laser active part 11 and/or the non-doped part 12 of the composite disk gain element preferably is made of multiple bonded sectors and/or sub-disks (different doped layers, not shown), wherein each of the sub-disks is made of a mono-crystalline material having no or negligible crystal defects. As an example, a preferred configuration is found by including two 1 mm active parts, one made of Yb:LuAG and a second made of Yb:YAG integrated to the gain medium as the laser active part 11. Advantageously, the provision of the sub-disks allows to modify the overall gain profile of the gain medium 10.

The gain medium 10 preferably is manufactured by growing of mono-crystalline materials with one of available growing methods, testing the crystallinity of the grown mono-crystalline materials, selecting sections with no or negligible crystal defects, cutting the selected sections with adapted shapes of disk sectors and/or sub-disks, and bonding and surface finishing of the selected sections as disk sectors 16 and/or sub-disks for providing the composite gain medium 10. Bonding is obtained e. g. by the commercially available method of Adhesive Free Bonding, alternatively, other methods involving contacting the surfaces free of voids under heat and pressure such that they become strongly adhered under van der Waals forces. Accordingly, a large gain medium can be provided with a zero or negligible crystal defect concentration as obtained by available growing methods in limited volume portions.

Preferably, the crystal orientation of the non-doped part 12 is different than the doped laser active part 11 as illustrated in Figure 3C. Different crystal orientation means that the doped laser active part 11 and the non-doped part 12 are bonded with different orientations of bonded crystal planes.

For instance, the doped laser active part 11 is cut normal to the crystal axis [111], and the non-doped part 12 is cut normal to the crystal axis [112]. Figures 3D illustrates the corresponding azimuthal rotation of the components about the z-axis. The crystal axis [110] of the non-doped part 12 is rotated counter-clockwise by 208° from the crystal axis [112] of the doped laser active part 11. The axis of rotation is the z-axis, i. e. the cylindrical symmetry axis of the gain medium 10. Simultaneously, the axes [111] of the doped laser active part 11 and [112] of the non-doped part 12 are aligned with the z-axis.

The basic principle of operation the laser amplifier apparatus 100 using a composite disk gain medium with a curved outer surface is described in [4], which is introduced to the present specification by reference, in particular with regard to the outer shape design of the gain medium and the pulse amplification therein. Supported by its geometry, the composite gain medium 10 used according to the invention can store a significantly higher amount of optical energy than other disk-shaped gain-elements of comparable aperture. In the present embodiment the above exemplary dimensions allow the storage of 2 to 4 joules before the effects of Amplified Spontaneous Emission (ASE) becomes limiting.

Figure 4 is perspective outer view of the fully assembled laser amplifier apparatus 100, including the housing 50 with a pressure tight housing wall 51. Figure 5 shows all mechanical components, the mirrors 21, 22, 23 and 24 and the gain medium 10 of the laser amplifier apparatus 100 connected with the housing wall 51 in an exploded view.

The housing 50 accommodates the resonator device, the gain medium, parts of the cooling system 40 and the cooling device 40A and parts of the coupling arrangement (see e. g. Figures 1 and 2) as an evacuable container. The housing 50 is supported by a support structure 52, e. g. on a table of an experimental setup or a manufacturing plant, and it comprises a pump interface (not shown) for connecting the housing 50 with a vacuum pump device (not shown). The housing wall 51 is composed of multiple wall sections being adapted for particular tasks, like monitoring the laser amplifier apparatus 100, incoupling and outcoupling light fields, connecting cooling supply lines and transmitting adjustment drive actions. Furthermore, the housing wall 51 provides a support for the resonator mirrors 21, 22, 23 and 24 and the gain medium 10, which are carried on an inner side of the housing wall 51, and for the diode pulse laser 61 of the pump source device 60 and the pump pulse deflectors 33 on an outer side of the housing wall 51 (see Figure 5). The housing wall 51 is made of e. g. aluminium and/or steel and transparent materials, like glass, for window portions.

Components of the housing 50 are assembled by blocks that come together with built in cooling channels designed to remove the heat generated after the absorption of the excess fluorescence and in keeping an isothermal environment thus avoiding mechanical deformations and instabilities due to unrestrained heating. With more details, the blocks of the housing wall 51 comprise a first telescopic mirror support section 53, a second telescopic mirror support section 54, a first end mirror support section 55, a second end mirror support section 56 and an incoupling mirror support section 57.

Each of the first and second telescopic mirror support sections 53, 54 carry one of the first and second telescopic mirrors 21, 22 (see Figures 1, 2 and 5) in an adjustable manner. The first and second telescopic mirror support sections 53, 54 include adjustment devices 58 for adjusting the position and orientation of the first and second telescopic mirrors 21, 22 relative to each other and to the optical axis of the resonator device 20. The adjustment devices 58 comprise e. g. motorized adjusting screws.

Each of the first and second end mirror support section 55, 56 carry one of first and second groups of end mirrors 23, 24 (see Figures 1, 2 and 5), preferably in an adjustable manner. Again, adjustment devices can be provided for adjusting the position and orientation of the first and second end mirrors 23, 24 relative to each other and to the next telescopic mirrors 21, 22, resp.. Furthermore, the first and second end mirror support section 55, 56 include supply interfaces 44 for connecting supply lines 43 of the main cooling system 40 (see Figure 1). Furthermore, the first end mirror support section 55 carries the diode pulse lasers 61 of the pump source device 60 on an outer side of the housing wall 51 (see Figures 1, 5).

The central incoupling mirror support section 57 carries the incoupling mirror carrier 31A of the incoupling mirrors 32A, 32B on an inner side of the housing wall 51 and the pump pulse deflectors 33 on an outer side of the housing wall 51 (see Figures 1, 5 and 6).

The housing 50 is a precision component designed using CAD programs and machined of suitable materials such as aluminum and/or steel. By the above support function, the housing 50 provides reference surfaces that register optical elements at their prescribed positions numerically calculated using ray-tracing programs and within specified tolerances achievable by CNC machining. By the pressure tight materials, the housing 50 creates an evacuated environment improving the efficiency of cryogenic operation, and keeping optical surfaces dust-free and, convenient for the propagation high intensity beams void of non-linear and thermally induced gas turbulence effects. Furthermore, the housing 50 provides internal containment surfaces which can be treated to effectively absorb and diffusely reflect any excess fluorescence generated by the gain medium during operation.

Further details of the first coupler device 31 are shown in Figure 6, which schematically illustrates how the pump pulses 3 from the pump source device 60 (see Figures 1, 4 and 5) are directed towards the incoupling mirrors 32A, 32B for a first pass (Figures 6A, 6B) and then re-imaged onto the further incoupling mirrors 34A, 34B for a second pass by use of plane auxiliary mirrors 36A, 36B and the curved second pump pulse deflectors 35A, 35B.

The incoupling mirrors 32A, 32B, 34A and 34B are arranged on the incoupling mirror carrier 31A, which is a pyramid-shape optic block made of e. g. copper and located at the common focal section between the first and second telescopic mirrors 21, 22. The mirror carrier 31A has the through-hole 38 being aligned with optical axis of the resonator device 20 and in coincidence with the beam path between the first and second telescopic mirrors 21, 22. The internal through-hole 38 provides a spatial filter for the multi-pass amplification. The incoupling mirrors 32A, 32B, 34A and 34B are provided by surfaces of the mirror carrier 31A plated with a reflective material, like e. g. gold.

The four gold-plated surfaces serve to direct the optical power from the two 4-kW fiber delivered diode pump sources 61, 62 towards the gain medium 10 (see Figures 1, 4 and 5). The cryogenically cooled Yb:YAG gain medium 10 affords nearly 90% absorption of the 940 nm diode pump light re-directed by a first gold-plated surface providing the first auxiliary mirror 34A. The remaining pump light is collected by a second gold-plated surface providing the second auxiliary mirror 34B and re-circulated for a second bounce to reach near full absorption of the pump light. To do this the 45° mirrors 36A, 36B and the curved pump pulse deflectors 35A, 35B of 800 mm radius of curvature combine to re-image the pump light onto the gain medium 10. Dichroic coatings are used to reflect the 940 nm pump light transmitting at 1030 nm to avoid parasitic lasing.

Figure 7 shows details of a gain medium carrier 70 being arranged in the housing 50 for positioning the gain medium 10 (not shown in Figure 7) near a central hole 21A of the first telescopic mirror (not shown in Figure 7). The smaller backplane surface 15 of the gain medium 10 (see Figure 3) is attached to a heat-spreader body 71, which is made of e. g. sapphire. Bonding of the gain medium with the heat-spreader body 71 is obtained e. g. by an indium layer. The heat-spreader body 71 is attached to a cryogenic chiller block 72 of the cooling device 40A (see Figure 1), also using an indium layer bonding.

The cryogenic chiller block 72 cools the gain-assembly and is capable of rejecting a heat-load of 200 Watts at 90 K from a 38 mm diameter cold finger. The cryogenic chiller block 72 comprises a commercial cryogenic chiller (e. g. manufactured by CryoSpectra GmbH). The gain-assembly is designed to transfer quantum-defect heat evolved in operation of the laser amplifier apparatus while keeping the gain medium peak temperature preferably below ≤ 120 K in order to harvest the engineering leverage resulting from enhanced thermo-mechanical, thermo-optical and spectroscopic properties attained by the gain medium below that temperature.

Practical embodiments of the inventive laser amplifier apparatus have been tested with the following results. Laboratory embodiments demonstrated diffraction limited performance of 1 Joule at up to 300 Hz with 20 ns narrow band pulses, up to 1.5 or even 2 Joules at 500 Hz, when using chirped-pulse seed pulses. When combined with the Chirped Pulse Amplification (CPA) technique, the inventive laser amplifier apparatus produces compressed 1-Joule laser pulses of < 5 ps duration, thus providing e. g. an ICS source for use in the production X-rays. With more details, with the seed pulse input of about 50 to 60 mJ the following table summarizes the performance:

| Pulse energy (mJ) | Repetition rate (Hz) | Diode pump (avg) (W) | Total run-time (h) |
|---|---|---|---|
| 500 | 100 | 200 | 20 |
| 1000+ | 100 | 200 | 10 |
| 1000+ | 200 | 400 | 4 |
| 1000+ | 300 | 600 | 2 |
| 900 | 400 | 800 | 0.75 |
| 850 | 500 | 1000 | 0.75 |

While the laser amplifier apparatus has been operated according to the above results with diffraction limited performance that is regularly obtained at up to 1 J per pulse at 300 Hz, extracting up to 2 Joules per pulse is possible as well. Experimental data show that the optical-to-optical efficiency surpasses 50% (output to input energy efficiency). A beam diameter in the near-field of about 18 mm was obtained and exhibits a supergaussian appearance indicative of saturated extraction. The far-field shows a near diffraction-limited spot on top of a dim scatter background. The measured laser output power and pointing have shown a high pointing stability which, even can be improved by enclosing the beam path from a lab environment and an active stabilizer. The average output power stability at repetition rates lower than 300 Hz was found to be ± 0.3% and remained flat for up to 3 hours in several tests.

The features of the invention disclosed in the above description, the drawings and the claims can be of significance individually, in combination or sub-combination for the implementation of the invention in its different embodiments.

## Claims

1. Laser amplifier apparatus (100), configured for creating laser pulses by optical amplification, comprising
- a gain medium (10) arranged for receiving at least one seed pulse (2) and at least one pump pulse (3) and for emitting at least one optically amplified output laser pulse (1),
- a resonator device (20) including the gain medium (10) and comprising a plurality of resonator mirrors (21, 22, 23, 24) spanning a folded, telescopic resonator beam path (25) with a multi-pass geometry, so that multiple passages of the seed (2) and pump pulses (3) through the gain medium (10) are provided,
- a coupler arrangement (30) configured for coupling the at least one seed pulse (2) and the at least one pump pulse (3) to the resonator device (20) and for coupling the output laser pulses (1) out of the resonator device (20), and
- a cooling device (40A) arranged for cooling the gain medium (10), wherein
- the resonator mirrors (21, 22, 23, 24) comprise a first telescope mirror (21) and a second telescope mirror (22) being arranged with a mutual distance and a focal section therebetween and defining an optical axis (z) of the resonator device (20), and a first group of end mirrors (23) and a second group of end mirrors (24) being arranged between the first and second telescope mirrors (21, 22) for forming the folded resonator beam path (25), wherein each of the first and second groups of end mirrors are arranged on a ring-shaped section surrounding the optical axis (z), and
- the resonator mirrors (21, 22, 23, 24) are arranged such that emitting sections of the gain medium (10) are imaged in themselves.

2. Laser amplifier apparatus according to claim 1, wherein
- the gain medium (10) is a composite disk gain element comprising a doped laser active part (11) bonded to a non-doped part (12), wherein the disk gain element is shaped with a plane surface (13) facing to the resonator beam path (25), a backplane surface (15) and a curved surface (14) for deflecting spontaneous emission out of the resonator beam path (25).

3. Laser amplifier apparatus according to claim 2, wherein
- the doped laser active part (11) and the non-doped part (12) have different crystalline orientations relative to the optical axis of the resonator device.

4. Laser amplifier apparatus according to one of claims 2 to 3, wherein
- at least one of the doped laser active part (11) and the non-doped part (12) of the composite disk gain element is made of multiple bonded disk sectors (16), wherein each of the disk sectors is made of a mono-crystalline material having no or negligible crystal defects.

5. Laser amplifier apparatus according to one of claims 2 to 4, wherein
- the composite disk gain element has a spatial orientation such that the plane surface of the composite disk gain element is perpendicular to a horizontal axis.

6. Laser amplifier apparatus according to one of claims 2 to 5, wherein the composite disk gain element has at least one of the features
- the composite disk gain element has a diameter in a range from 5 mm to 10 cm,
- the curved surface of the composite disk gain element is a section of a parabolic surface,
- the curved surface of the composite disk gain element is defined in cylindrical coordinates with origin at the center of the plane surface by z(r) = 6.28 - 1.70*r + 0.106*r², with r ≥ 10mm and 0 ≤ z(r) ≤ 10 mm,
- the composite disk gain element is made of Yb:YAG or Yb:LuAG,
- the doped laser active part (11) of the composite disk gain element is doped with Yb,
- the plane surface (13) of the composite disk gain element has an anti-reflective coating, and
- the backplane surface (15) has a dielectric high-reflective coating.

7. Laser amplifier apparatus according to one of the foregoing claims, wherein
- the gain medium (10) is arranged in a central opening of the first telescope mirror (21).

8. Laser amplifier apparatus according to one of the foregoing claims, wherein
- the cooling device (40A) is thermally coupled with a narrow side of the curved surface (14) of the gain medium (10).

9. Laser amplifier apparatus according to one of the foregoing claims, wherein
- the coupler arrangement (30) comprises a first coupler device (31) configured for coupling the pump pulses (3) to the resonator device (20), wherein the first coupler device (31) comprises at least one incoupling mirror (32) being arranged in the resonator device between the telescopic mirrors with an inclination relative to the optical axis (z) of the resonator device (20).

10. Laser amplifier apparatus according to claim 7, wherein
- the at least one incoupling mirror (32) is arranged at the focal section between the first and second telescope mirrors (21, 22).

11. Laser amplifier apparatus according to claim 7 or 8, wherein the first coupler device (31) has at least one of the features
- the first coupler device (31) provides a pinhole in a Fourier plane relative to the gain medium (10),
- the first coupler device (31) comprises at least two incoupling mirrors (32A, 32B) being arranged for coupling pump pulses (3) from different directions to the resonator device (20), and
- the first coupler device (31) is coupled with a main cooling system (40).

12. Laser amplifier apparatus according to one of the foregoing claims, wherein
- the coupler arrangement (30) comprises a second coupler device (36) being configured for coupling the seed pulses (2) to the resonator device (20) and for coupling the output laser pulses out of the resonator device (20), wherein the second coupler device (36) comprises one of the resonator mirrors (21, 22, 23, 24) of the second group of end mirrors (24) as an outcoupling mirror and a polarizing beam splitter (37).

13. Laser amplifier apparatus according to one of the foregoing claims, wherein
- the laser amplifier apparatus (100) includes a housing (50), in particular an evacuable container, with a housing wall (51), wherein the resonator mirrors (21, 22, 23, 24) are carried on an inner side of the housing wall (51).

14. Laser amplifier apparatus according to one of the foregoing claims, including at least one of the features
- the resonator device (20) is free of optical lenses, and
- the laser amplifier apparatus (100) includes a pump source device (60) with at least one pump pulse laser source (61) arranged for creating a sequence of pump pulses (3) and a seed source device (70) with at least one seed pulse laser source (71) arranged for creating a sequence of seed pulses (2).

15. Method of amplifying laser pulses, wherein the laser amplifier apparatus (100) according to one of the foregoing claims is used, comprising the steps of:
- creating at least one seed pulse (2) and at least one pump pulse (3),
- coupling the at least one seed pulse (2) and the at least one pump pulse (3) to the resonator device (20) and irradiating the gain medium (10), wherein multiple passages of the seed and pump pulses (3) through the gain medium (10) are provided by the plurality of resonator mirrors (21, 22, 23, 24) of the folded, telescopic resonator beam path (25) with the multi-pass geometry, and
- coupling at least one output laser pulse (1) amplified in the gain medium (10) out of the resonator device (20).
